# EUROPÄISCHE PATENTSCHRIFT

(11) **EP 3 465 264 B1**
(45) Veröffentlichungstag und Bekanntmachung des Hinweises auf die Patenterteilung: **07.06.2023**
(21) Anmeldenummer: 17716237.7
(22) Anmeldetag: 10.04.2017
(51) Int. Cl.: G01S 15/931, G01S 13/931

(54) **VERFAHREN ZUR ERKENNUNG WENIGSTENS EINER PARKLÜCKE FÜR EIN FAHRZEUG**
METHOD FOR DETECTING AT LEAST ONE PARKING SPACE FOR A VEHICLE
PROCÉDÉ DE DÉTECTION D'AU MOINS UN EMPLACEMENT DE STATIONNEMENT POUR UN VÉHICULE

(30) Priorität: 03.06.2016 DE 102016209810
(43) Veröffentlichungstag der Anmeldung: 10.04.2019
(73) Patentinhaber: Robert Bosch GmbH, 70442 Stuttgart (DE)
(72) Erfinder: KEMPF, Markus, 70190 Stuttgart (DE); MAYER, Philipp, 70176 Stuttgart (DE)
(86) Internationale Anmeldenummer: PCT/EP2017/058545
(87) Internationale Veröffentlichungsnummer: WO 2017/207151

(56) Entgegenhaltungen:
- DE-A1-102007 039 348
- DE-A1-102008 028 550
- DE-A1-102010 025 552
- DE-A1-102014 009 627
- DE-T5-112009 005 165

## Beschreibung

### Stand der Technik

Die Erfindung betrifft ein Verfahren zur Erkennung wenigstens einer Parklücke für ein Fahrzeug sowie ein entsprechenden Fahrassistenzsystem.

Fahrerassistenzfunktionen basierend auf Ultraschallsensoren sind aus dem Stand der Technik hinreichend bekannt. Parklücken werden mittels Ultraschallsensoren vermessen und dem Fahrer als Parkmöglichkeit angeboten. Ein halb- oder vollautomatisiertes Einparkassistenzsystem unterstützt den Fahrer beim Einparken in die so erkannte freie Parklücke. Es ist ebenfalls bekannt, die Positionen und Abmessungen von detektierten Parklücken zu einem Datenserver zu übertragen, siehe z.B. DE 10 2004 062 021 A1, DE 10 2009 028 024 A1 und DE 10 2008 028 550.

Bei bestehenden Systemen ist die Fehldetektionsrate bei Parklückendetektionen relativ hoch. So können Parklückendetektionen z.B. aus Reflexionen von Bäumen oder Wänden resultieren ohne das physikalisch eine reale Parklücke vorliegt.

DE 10 2013 018 721 A1 beschreibt ein Verfahren zur Erkennung wenigstens einer Parklücke unter Verwendung eines Sensors, der ein Primärsignal aussendet und ein Echosignal empfängt. Bei dem Verfahren werden Objekte klassifiziert, wobei beispielsweise zwischen Fahrzeug und Nicht-Fahrzeug unterschieden wird. Auch das Erkennen von Bordsteinen, Bäumen, Mülltonnen und dergleichen ist möglich. Ebenfalls kann zwischen ortsfesten und nichtortsfesten Objekten unterschieden werden. Zudem ist vorgesehen, die Ausrichtung der erkannten Objekte festzustellen. Parklücken mit hoher Wahrscheinlichkeit befinden sich zwischen zwei als Fahrzeug klassifizierten Objekten mit ausreichendem Abstand zwischen den beiden Objekten. Mit Hilfe eines als Automobil erkannten Objekts, dessen Orientierung bestimmt wurde, kann auch die Ausrichtung der Parklücke erkannt werden.

DE 10 2011 113 916 A1 betrifft ein Verfahren zur Klassifikation von Parkszenarien für ein Einparksystem. Dabei werden begrenzende Objekte einer Parklücke, Tiefe der Parklücke, Breite der Parklücke und weitere Parameter verwendet. Es erfolgt eine Beurteilung der Parkszenarios durch eine Bewertung der einzelnen Kriterien jedes Parkszenarios, wobei die Einzelbewertungen jeder Klassifizierung jedes Parkszenarios zusammengefasst werden. Dabei kann die Beurteilung oder Klassifikation anhand einer Zuordnung von Wahrscheinlichkeiten oder durch eine Verteilung von Punktwerten erfolgen.

DE 10 2014 009 627 A1 beschreibt ein Verfahren zur Meldung einer freien Parklücke für ein Fahrzeug. Dabei ist vorgesehen, freie Parkplätze mit Hilfe von fahrzeugeigenen Sensoren zu erkennen und mit Attributen wie Länge, Breite, Höhe, Winkel, Typ und geographischer Position zu versehen. Zudem ist zusätzlich eine Verknüpfung mit einer digitalen Straßenkarte möglich, um die Nutzung von Flächen auszuschließen, die beispielsweise zu dicht an einer Kreuzung liegen. Die erkannten Parklücken werden anhand der ermittelten Informationen gefiltert. Relevante Parklücken werden an andere Fahrzeuge gemeldet, wobei dazu entweder eine direkte Kommunikation zwischen zwei Fahrzeugen oder ein zentraler Datenserver verwendet wird.

DE 10 2010 025 552 A1 offenbart ein Verfahren zum Erfassen des Umfeldes eines Kraftfahrzeugs zum Bestimmen möglicher Parklücken mittels einer auf Ultraschall basierenden Umfeldsensorik. Bei diesem Verfahren basiert die Erfassung des Umfeldes des Kraftfahrzeugs auf der Detektion von ersten und zweiten Echos der von der Umfeldsensorik ausgesandten und an Objekten reflektierten Ultraschallwellen. Mittels der Detektion erster und zweiter Echos wird eine Analyse des Kraftfahrzeugsumfeldes ermöglicht, ohne dass komplizierte Untersuchungen des empfangenen Signals notwendig sind. Objekte, die bezüglich eines Messpunktes nur erste Echos erzeugen, werden bezüglich ihrer Höhe anders klassifiziert als Objekte, die bezüglich eines Messpunktes erste und zweite Echos erzeugen.

DE 11 2009 005165 T5 zeigt eine Einparkunterstützungsvorrichtung. Es werden Erfassungspunktdaten entsprechend einem Eckteilstück eines geparkten Fahrzeugs aus Erfassungspunktdaten extrahiert, die eine Reihe von Erfassungspunkten zeigen, bei denen jeweils die Distanz zu dem geparkten Fahrzeug erfasst wird.

DE 10 2007 039348 A1 beschreibt einen Abstandssensor und ein Verfahren zur Bestimmung eines Abstands. Der Abstandsensor weist einen Ultraschallsender und -empfänger zum Aussenden von Ultraschallpulsen und Empfangen reflektierter Ultraschallpulse von einem Objekt auf. Eine Diskriminatoreinheit ist eingerichtet, einen Schwerpunkt des empfangenen reflektierten Ultraschallpulses, basierend auf einem Überschreiten eines ersten Schwellwertes und einem nachfolgenden Unterschreiten eines zweiten Schwellwertes, durch den empfangenen reflektierten Ultraschallpuls zu bestimmen. Eine Flugzeit-Auswertungseinrichtung ist eingerichtet, basierend auf dem bestimmten Schwerpunkt, den Abstand zu dem Objekt zu bestimmen.

### Offenbarung der Erfindung

Es wird ein Verfahren zur Erkennung wenigstens einer Parklücke für ein Fahrzeug, insbesondere ein Kraftfahrzeug, vorgeschlagen, das die folgenden Verfahrensschritte wie in Anspruch 1 umfasst.

Zunächst werden Objekte in der Umgebung des Fahrzeugs mittels mindestens eines Abstandssensors des Fahrzeugs erfasst. Bei dem erfindungsgemäßen Verfahren ist vorgesehen, dass das Fahrzeug über Umfeldsensoren verfügt, um in der Umgebung mögliche Parkplätze zu erfassen. Geeignete Umfeldsensoren umfassen Radar-, Lidar- oder Ultraschallsensoren. Sind die Umfeldsensoren beispielsweise als Abstandssensoren, insbesondere als ultraschallbasierende Abstandssensoren, ausgeführt, so werden durch ein Fahrzeug mögliche Parkplätze erkannt, indem typischerweise wenigstens einer der Abstandssensoren zur Seite ausgerichtet am Fahrzeug angeordnet wird und das Fahrzeug an den möglichen Parkplätzen vorbeifährt. Bevorzugt sind die Umfeldsensoren der Fahrzeuge als Abstandssensoren ausgeführt, wobei mögliche Parkplätze bei einer Vorbeifahrt erfasst werden. Der Umfeldsensor sendet dazu Signale aus, die an Objekten in der Umgebung des Fahrzeugs reflektiert werden. Die reflektierten Signale werden als Echosignale von dem Umfeldsensor empfangen. In bekannter Weise kann aus der Laufzeit der Signale beispielsweise ein Objektabstand berechnet werden. Das Erfassen der Objekte in der Umgebung des Fahrzeugs kann beispielsweise erfolgen während das Fahrzeug an den Objekten vorbeifährt.

Von den erfassten Objekten werden diejenigen Objekte identifiziert, bei denen es sich, zum Beispiel aufgrund ihrer räumlichen Anordnung um parklückenbegrenzenden Objekte handelt. Dabei kann zwischen Objekten, die die Parklücke seitlich begrenzen (z.B. parkende Fahrzeuge) und lateralen Parklückenbegrenzungen (z.B. einen Bordstein) unterschieden werden. Die Identifikation erfolgt durch Auswertung der erfassten Echosignale.

Im nächsten Schritt erfolgt ein Klassifizieren der parklückenbegrenzenden Objekte mittels charakteristischer Strukturen der den parklückenbegrenzenden Objekten zugeordneten Echosignale. Dabei wird jedem parklückenbegrenzenden Objekt eine bestimmte Objektklasse zugeordnet.

Abhängig von der Klassifizierung der parklückenbegrenzenden Objekte wird daraufhin erfindungsgemäß eine Parklückenqualität bestimmt, wobei eine durch die parklückenbegrenzenden Objekte festgelegte Parklücke dann als eine mögliche Parklücke für das Fahrzeug erkannt wird, wenn die Parklückenqualität einem vorgegebenen Grenzwert entspricht oder den vorgegebenen Grenzwert überschreitet.

Die Erfindung schlägt also ein Verfahren vor, mit dem Parklücken mit hoher Genauigkeit erfasst und eine Qualität der Parklücke bestimmt werden kann. Die Erfindung ermöglicht die Berechnung einer Parklückenqualität von insbesondere mittels Ultraschallsensoren detektierten Parklücken. Die so bestimmte Parklückenqualität kann bevorzugt in verschiedene Stufen aufgelöst werden, z.B. "sehr niedrig", "niedrig", "mittel", "hoch" und "sehr hoch". Über das Parklücken-Qualitätsmaß können Fehldetektionen gefiltert werden. Dies kann zum Beispiel direkt in einem Steuergerät des Fahrzeugs erfolgen, als auch zusätzlich oder alternativ auf einem Datenserver, also einem außerhalb des Fahrzeugs vorgesehenen Rechner, der Daten von dem Fahrzeug empfangen und Daten an das Fahrzeug übertragen kann. Dabei können beispielsweise die für die Berechnung der Parklückenqualität erforderlichen Parameter dem Datenserver übermittelt werden. Ein mehrstufiges Parklücken-Qualitätsmaß ermöglicht insbesondere, die Sensitivität der Filterung einzustellen, indem ein Schwellwert für die Parklückenqualität frei wählbar ist. Mit anderen Worten kann ein Arbeitspunkt je nach spezifischem Anwendungsfall definiert werden. Beispielsweise können bei einer Einstellung mit "niedriger" Sensitivität nur Parklücken, die eine Qualität von "sehr niedrig" aufweisen, als ungeeignet herausgefiltert werden. Bei Einstellung einer "hohen" Sensitivität werden Parklücken mit einer Parklückenqualität von "sehr niedrig", "niedrig" und "mittel" als ungeeignet herausgefiltert werden. Der Arbeitspunkt, also der Schwellwert, kann beispielsweise vom Fahrer des Fahrzeugs gemäß dessen Vorlieben gewählt werden oder basierend auf Erfahrungswerten und/oder aktuellen Bedingungen vorgewählt sein. Der Schwellwert kann beispielsweise abhängig vom Fahrzeugtyp vorgegeben sein.

Zur Erfassung einer möglichen Parklücke werden über die Umfeldsensoren der Fahrzeuge mehrere Parameter bestimmt. Diese Parameter umfassen insbesondere Referenzobjekte, die die mögliche Parklücke begrenzen. Bei Parkplätzen, die an eine Straße angrenzen, gibt es in Bezug auf die Fahrtrichtung durch die Straße ein erstes parklückenbegrenzendes Objekt, welches die mögliche Parklücke nach hinten begrenzt, ein zweites parklückenbegrenzendes Objekt, welches die mögliche Parklücke nach vorne begrenzt und eine laterale Parklückenbegrenzung, die die Parklücke zur von der Straßenmitte abgewandten Seite begrenzt. Bei dem ersten und zweiten parklückenbegrenzenden Objekt handelt es sich beispielsweise um parkende Fahrzeuge und bei der lateralen Referenz handelt es sich beispielsweise um einen Bordstein.

Zusätzlich kann die Position einer möglichen Parklücke unter Verwendung einer durch die Umfeldsensoren relativ zum Fahrzeug ermittelten Position und einer mittels Satellitennavigation ermittelten Fahrzeugposition bestimmt werden. Hierbei wird mit Hilfe der Umfeldsensoren des Fahrzeugs die Position einer möglichen Parklücke zunächst relativ zur Eigenposition dieses Fahrzeugs ermittelt. Die Eigenposition des Fahrzeugs wiederum kann mittels Satellitennavigation ermittelt werden, so dass einem möglichen Parkplatz eine absolute Positionsangabe zugeordnet wird.

Erfindungsgemäß erfolgt eine Klassifizierung der parklückenbegrenzenden Objekte basierend auf einer Auswertung der von dem jeweiligen Objekt zurückgeworfenen Echosignale mittels charakteristischer Strukturen dieser Echosignale. Gemäß der Erfindung umfassen die charakteristischen Strukturen der Echosignale Hyperbelstrukturen die sich durch Auftragen der Sensorposition zum Messzeitpunkt gegenüber einem aus der Laufzeit des Echosignals bestimmten Objektabstand ergeben. Derartige Hyperbelstrukturen entstehen in besonders ausgeprägtem Maß, wenn es sich bei dem erfassten parklückenbegrenzenden Objekt um ein kantiges, insbesondere ein im Wesentlichen quaderförmiges Objekt handelt. Die charakteristischen Hyperbelstrukturen entstehen dadurch, dass durch den Empfang des Echosignals an einer bestimmten Sensorposition zwar durch Ermittlung der Signallaufzeit der Abstand zu dem parklückenbegrenzenden Objekt bestimmt werden kann, nicht jedoch die Richtung, in der sich das parklückenbegrenzende Objekt relativ zur Sensorposition befindet. Daher wird bei Annäherung des Sensors an das Objekt der Abstand zu der dem Sensor am nächsten liegenden Ecke des Quaders als Hyperbel abgebildet. Um derartige Hyperbelstrukturen überhaupt erfassen zu können muss ein ausreichend starkes Echosignal vorhanden sein. Bei Objekten mit scharfen Kanten und Ecken wird nur ein sehr geringer Anteil des einfallenden Signals als Echosignal zu dem Sensor zurückgeworfen und es ist nicht möglich die Hyperbelstruktur in den Messdaten zu erfassen. Handelt es sich bei dem Objekt jedoch beispielsweise um ein geparktes Fahrzeug, das abgerundete Kanten und Ecken aufweist, so wird ein ausreichender Anteil des einfallenden Signals als Echosignal zu dem Sensor zurückgeworfen und Hyperbelstrukturen können in den Messdaten erkannt werden. Werden derartige Hyperbelstrukturen in den Messdaten erkannt, kann also daraus geschlossen werden, dass es sich bei dem parklückenbegrenzenden Objekt um ein Objekt mit abgerundeten Ecken handelt. In der Regel wird es sich dabei um ein parkendes Fahrzeug handeln. Werden keine Hyperbelstrukturen erkannt, so kann darauf geschlossen werden, dass es sich bei dem parklückenbegrenzenden Objekt nicht um ein abgestelltes Fahrzeug handelt. Zusätzlich kann die erfasste Länge des Objekts bei der Klassifizierung miteinbezogen werden.

Erfindungsgemäß wird eine Parklücke durch ein erstes parklückenbegrenzendes Objekt, ein zweites parklückenbegrenzendes Objekt und eine laterale Parklückenbegrenzung festgelegt. Es wird eine Klassifizierung vorgenommen, wobei für das erste und zweite parklückenbegrenzende Objekt eine Klassifizierung in Objektklassen "kein Objekt vorhanden", "Quer zur Fahrtrichtung parkendes Fahrzeug", und "Parallel zur Fahrtrichtung parkendes Fahrzeug" vorgenommen wird. Bei der lateralen Parkplatzbegrenzung wird eine Klassifizierung in die Objektklassen "Keine laterale Parkplatzbegrenzung vorhanden", "Niedrige laterale Parklückenbegrenzung", und "Hohe laterale Parklückenbegrenzung" vorgenommen. Eine "Niedrige laterale Parklückenbegrenzung" kann beispielsweise ein Bordstein sein, eine "Hohe laterale Parklückenbegrenzung" kann beispielsweise eine Wand sein.

Die Klassifizierung erfolgt durch Bestimmung der Länge in Bezug auf die Fahrtrichtung der parklückenbegrenzenden Objekte und der Bestimmung der Anzahl Messpunkte, die einer Hyperbelstruktur zugeordnet werden können.

Durch zusätzliches Auswerten der Positionen und Größen, insbesondere der Länge in Bezug auf die Fahrtrichtung der parklückenbegrenzenden Objekte, können außerdem Position, Orientierung und Größe der möglichen Parklücke abgeschätzt werden. Aus der Länge und Breite der möglichen Parklücke kann beispielsweise geschlossen werden, ob es sich bei der möglichen Parklücke um eine Parallelparklücke oder um eine Längsparklücke handelt. Bei Längsparklücken wird das Fahrzeug parallel zur Fahrtrichtung abgestellt, bei Querparklücken quer zur Fahrtrichtung. Wird beispielsweise festgestellt, dass die Breite einer möglichen Parklücke, also die Abmessung der Parklücke quer zur Fahrtrichtung, kleiner als die Fahrzeuglänge ist, so wird auf eine Längsparklücke geschlossen. Ist wiederum die Breite einer möglichen Parklücke größer als die Fahrzeuglänge, so wird auf das Vorliegen einer Querparklücke geschlossen. Ausgehend von der so erfolgten Klassifizierung der parklückenbegrenzenden Objekte wird in Schritt d. des Verfahrens ein Qualitätsmaß bestimmt, das die Parklückenqualität repräsentiert. Dabei wird insbesondere jeder möglichen Kombination von Objektklassen des ersten parklückenbegrenzenden Objekts, des zweites parklückenbegrenzendes Objekt und der lateralen Parklückenbegrenzung ein Qualitätsmaß zugeordnet. Ein hohes Qualitätsmaß steht beispielsweise für eine hohe Parklückenqualität, also eine Parklücke, die mit hoher Wahrscheinlichkeit eine tatsächlich vorhandene Parkmöglichkeit darstellt und nicht durch eine Fehldetektion, beispielsweise vom Gegenverkehr, verursacht ist.

Insgesamt bietet die Erfindung den Vorteil, dass dem Fahrer weniger Fehldetektionen zum Parken angeboten werden. Außerdem kann die Qualität einer Parkraumkarte, die auf Basis der erfindungsgemäß detektierten und bewerteten Parklücken erstellt wird, aufgrund der gesenkten Anzahl an Fehldetektionen, verbessert werden.

### Kurze Beschreibung der Zeichnungen

Figur 1 a)-c) zeigt schematisch unterschiedliche Objektklassen für parklückenbegrenzenden Objekte gemäß einer Ausführung der Erfindung:
   a) Parallel parkendes Fahrzeug
   b) Quer parkendes Fahrzeug
   c) Kurzes Objekt
Figur 2 a) stellt die unterschiedliche Schallreflexion an einem Fahrzeug und an einem kurzen, kantigen Objekt (Kiste) schematisch dar, die zur Entstehung von Hyperbelstrukturen im Fall der Schallreflexion an dem Fahrzeug führt.

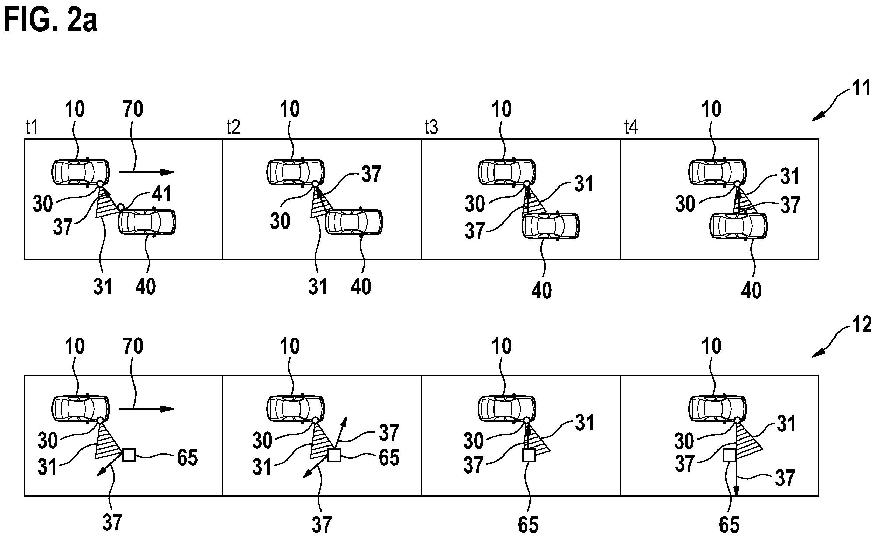

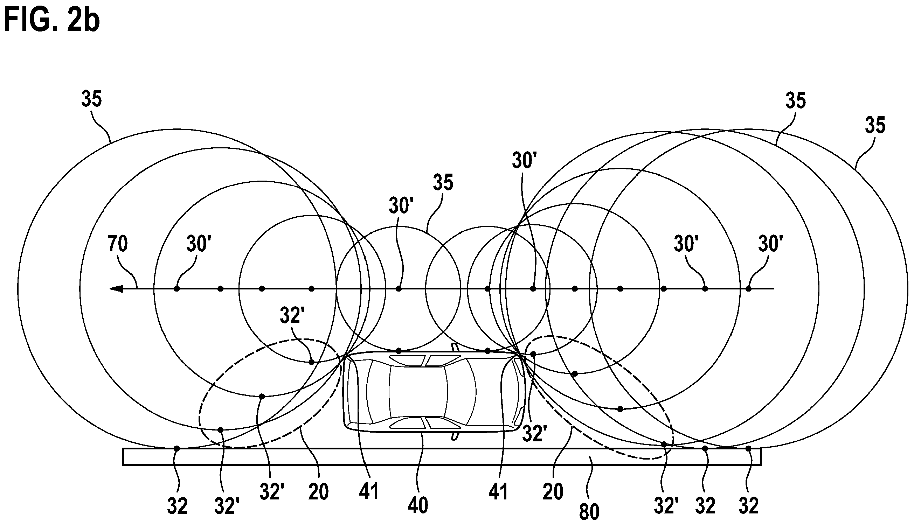

Figur 2 b) zeigt schematisch eine Erfassung von Echosignalen beim Vorbeifahren an einem parallel parkenden Fahrzeug und die Entstehung von charakteristischen Hyperbelstrukturen nach einer Ausführung der Erfindung.

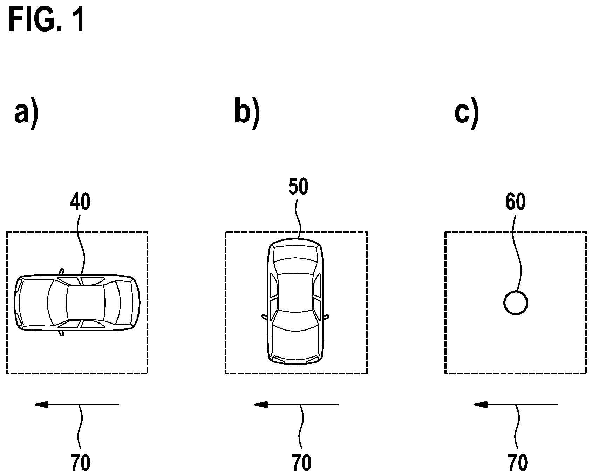

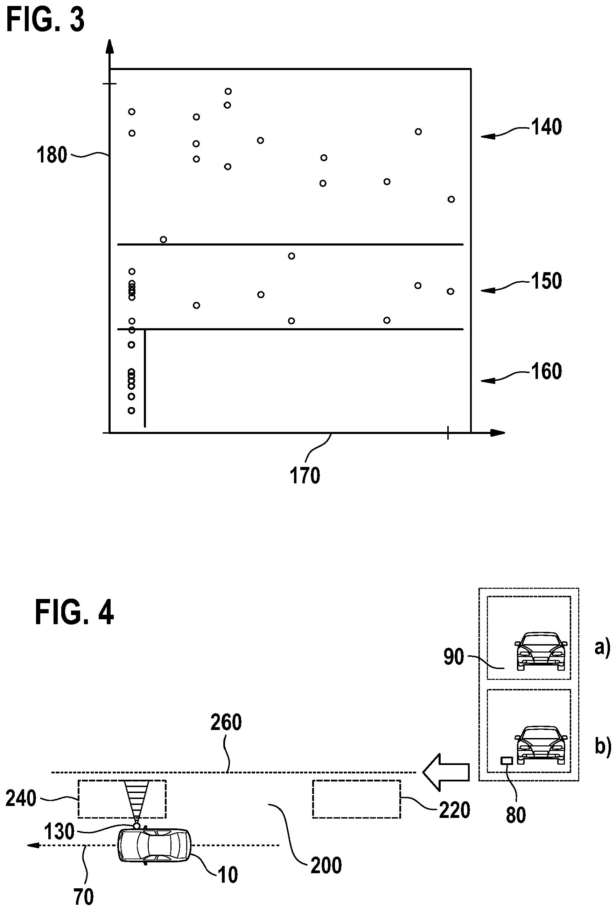

Figur 3 zeigt ein Diagramm in dem die Anzahl der erfassten Hyperbelstruktur gegen die erfasste Objektlänge für die drei Objektklassen gemäß Figur 1.
Figur 4 zeigt schematisch die Erfassung von parklückenbegrenzenden Objekten und lateralen Parklückenbegrenzungen nach einer Ausführung der Erfindung.

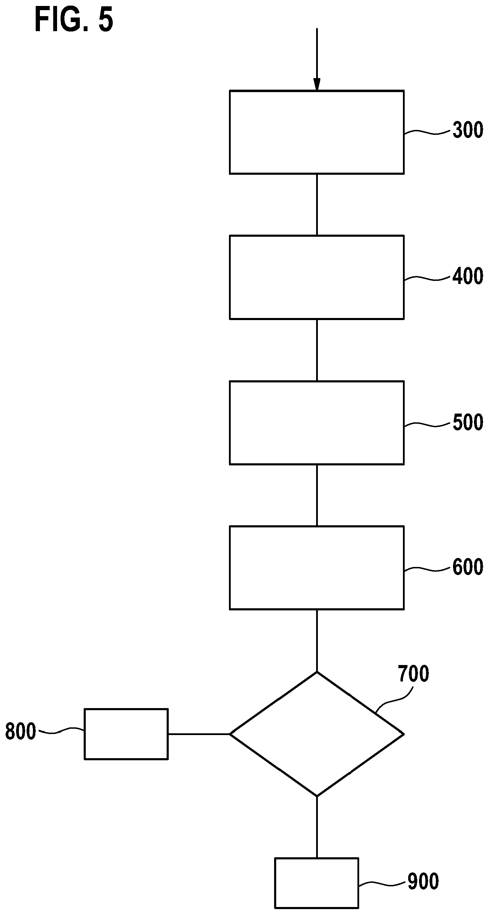

Figur 5 zeigt ein Ablaufdiagramm eines Verfahrens gemäß einer möglichen Ausführung der Erfindung.

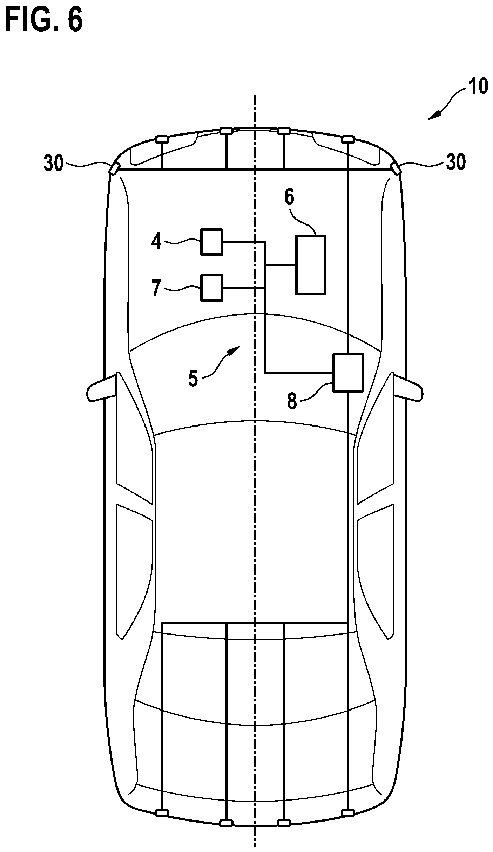

Figur 6 zeigt in Draufsicht ein Fahrzeug mit einem Parkassistenzsystem nach einer möglichen Ausführung der Erfindung.

In der nachfolgenden Beschreibung der Ausführungsbeispiele der Erfindung werden gleiche Elemente mit gleichen Bezugszeichen bezeichnet, wobei auf eine wiederholte Beschreibung dieser Elemente gegebenenfalls verzichtet wird. Die Figuren stellen den Gegenstand der Erfindung nur schematisch dar.

In den Figuren 1 a)-c) sind unterschiedliche Objektklassen für parklückenbegrenzenden Objekte anhand von Beispielen dargestellt. So zeigt Figur 1 a) ein parallel zur Fahrtrichtung 70 abgestelltes Fahrzeug 45, entsprechend einer ersten Objektklasse "Parallel parkendes Fahrzeug". Figur 1 b) zeigt ein quer zur Fahrtrichtung 70 abgestelltes Fahrzeug 50, entsprechend einer zweiten Objektklasse "quer parkendes Fahrzeug". Figur 1 c) zeigt ein Objekt 60 mit in Draufsicht näherungsweise rundem Querschnitt, beispielsweise einen Pfosten oder einen Laternenpfahl, entsprechend einer dritten Objektklasse "kurzes Objekt". Zusätzlich kann noch eine vierte Objektklasse "kein Objekt" vorgesehen sein. In einer bevorzugten Ausführung der Erfindung werden diejenigen Objekte, die die Parklücke in Fahrtrichtung begrenzen in eine der genannten Objektklassen klassifiziert.

Die Auswahl, um welche Klassifizierung es sich handelt erfolgt erfindungsgemäß durch Auswertung von charakteristischer Strukturen der Echosignale, die während der Vorbeifahrt des parklückensuchenden Fahrzeugs mittels eines Umfeldsensors, wie z.B. eines Ultraschallsensors erfasst werden. Die Echosignale können in bekannter Weise entstehen, indem von einem Ultraschallsensor ausgesendete Signale an dem parklückenbegrenzenden Objekt reflektiert werden und die entstehenden Echosignale von dem Sensor wieder empfangen werden. Wie in Figur 2 a) dargestellt, spielt die Geometrie des parklückenbegrenzenden Objekts eine große Rolle darin, an welchen Sensorpositionen Echosignale empfangen werden können.

Im oberen Teil der Figur 2 a) bewegt sich ein parklückensuchendes Fahrzeug 10 an einem parallel zur Fahrtrichtung 70 abgestellten Fahrzeug 40 vorbei. Das Fahrzeug 10 weist einen Ultraschallsensor 30 auf der seitlich vorne an dem Fahrzeug 10 angeordnet ist. Der Ultraschallsensor 30 weist eine üblicherweise keulenförmige Richtcharakteristik 31 auf. Die Richtcharakteristik 31 beschreibt den Raumbereich in dem Ultraschallwellen durch den Ultraschallsensor 30 abgestrahlt und empfangen werden können. Dieser kann sich bevorzugt seitlich des Fahrzeugs 10 erstrecken.

Zum Zeitpunkt t1 befindet sich das Fahrzeug 10 noch deutlich vor dem abgestellten Fahrzeug 40. Wie durch den Pfeil 37 angedeutet können an dieser Position des Sensors 30 bereits schon Echosignale aus dem Bereich der hinteren linken Ecke 41 des Fahrzeugs 40 empfangen werden, da die einfallenden Ultraschallsignale durch die abgerundete Form des Bereichs der hinteren linken Ecke 41 zum Sensor 30 zurückreflektiert werden können. e Zum Zeitpunkt t2 schließt das Fahrzeug 10 zu dem parallel abgestellten Fahrzeug 40 auf. Die Echosignale werden jedoch immer noch hauptsächlich aus dem Bereich der hinteren linken Ecke 41 des Fahrzeugs 40 empfangen. Zu den Zeitpunkten t3 und t4 befindet sich das Fahrzeug 10, genauer gesagt der Sensor 30 auf einer Höhe mit dem Fahrzeug 40, die Echosignale 37 werden nun von der Seitenkontur des Fahrzeugs 40 erzeugt (sogenannte Konturechos). Wird der durch Auswertung der Echosignale errechnete Abstand zwischen dem Fahrzeug 40 und der Position des Sensors 30 gegen die Sensorposition aufgetragen ergibt sich für die Zeitpunkte t1 und t2 eine charakteristische Hyperbelstruktur, wie in Figur 2 b) im Detail dargestellt ist. An den Zeitpunkte t3 und t4 wird die Kontur des Fahrzeugs 40 vermessen, woraus sich beispielsweise die Länge des Fahrzeugs 40 bestimmen lässt.

Im unteren Teil der Figur 2 a) bewegt sich ein parklückensuchendes Fahrzeug 10 an einem kurzen quaderförmigen Objekt 65, z.B. einer Kiste, vorbei. So lange sich das Fahrzeug 10 bzw. der Ultraschallsensor 30 nicht auf einer Höhe mit dem Objekt 65 befindet, wird aufgrund der ebenen Seitenflächen und scharfen Ecken und Kanten des Objekts 65 nur ein geringer Anteil der gesendeten Ultraschallwellen zu dem Sensor 30 zurück, wie durch die Pfeile 37 angedeutet ist, die die Hauptreflexionsrichtung der einfallenden Ultraschallwellen repräsentieren. Somit wird der Ultraschallsensor 30 an den den Zeitpunkten t1 und t2 entsprechenden Positionen keine oder nur sehr geringe Echosignale empfangen. Zum Zeitpunkt t3 befindet sich das Fahrzeug 10, genauer gesagt der Sensor 30 auf einer Höhe mit dem Objekt 65, die Echosignale 37 werden nun direkt zu dem Ultraschallsensor 30 reflektiert. Wird der durch Auswertung der Echosignale errechnete Abstand zwischen dem Objekt 65 und der Position des Sensors 30 gegen die Sensorposition aufgetragen ergibt sich in diesem Fall keine charakteristische Hyperbelstruktur.

Zwar können auch bei einem runden kurzen Objekt (z.B. einem Rohr oder Laternenpfahl) Hyperbelstrukturen entstehen, diese können jedoch aufgrund der fehlenden bzw. zu geringen Anzahl an Konturechos, von einem Fahrzeug unterschieden werden.

Figur 2 b) stellt im Detail dar, wie charakteristische Hyperbelstrukturen in den erfassten Daten erkannt werden können. Die in Figur 2 b) dargestellte Situation entspricht im Wesentlichen der in Figur 2a) oben dargestellten Situation:
Ein parklückensuchendes Fahrzeug (nicht dargestellt) bewegt sich entlang einer Fahrtrichtung 70 an einem parallel zur Fahrtrichtung 70 abgestellten Fahrzeug 40 vorbei. In regelmäßigen zeitlichen Abständen wird an einer Sensorposition 30' ein Ultraschallsignal ausgesendet und ein Echosignal empfangen. Aus der Laufzeit des Echosignals kann bei bekannten Umgebungsbedingungen der Abstand zwischen der Sensorposition und dem Objekt berechnet werden von dem das Echosignal zurückgeworfen wurde. In der Darstellung der Figur 2 b) sind die so berechneten Abstände als Kreise 35 dargestellt, deren jeweiliger Mittelpunkt die zugehörigen Sensorposition 30' ist. Die senkrechte Projektion der Sensorposition 30' auf den zugehörigen Kreis 35 ergibt den Messpunkt 32. Stimmt der Messpunkt mit dem tatsächlichen Punkt überein von dem das Echosignal zurückgeworfen wurde, so repräsentiert der Messpunkt 32 ein sogenanntes Konturecho. Stammt das Echosignal jedoch von den abgerundeten Eckbereichen 41 des Fahrzeugs 40, so ergeben sich charakteristische Messpunkte 32', die eine Hyperbelstruktur 20 ausbilden.

In Figur 3 ist dargestellt, wie ein Klassifizieren der parklückenbegrenzenden Objekte mittels charakteristischer Strukturen der Echosignale erfolgen kann. In dem gezeigten Diagramm sind die gemessenen Längen von verschiedenen erfassten parklückenbegrenzenden Objekten auf der y-Achse 180 gegen die Anzahl der erfassten Hyperbelpunkte 32' (vergleiche Figur 2 b)) auf der x-Achse 170 aufgetragen. Es ergeben sich im Wesentlichen drei Bereiche 140, 150, 160. Der Bereich 140, der durch eine Länge von mehr als beispielsweise 2,13 Metern und eine breite Streuung von Hyperbelechos gekennzeichnet ist, wird einem parallel zur Fahrtrichtung abgestellten Fahrzeug 40 zugeordnet, entsprechend der ersten Objektklasse "Parallel parkendes Fahrzeug". Der Bereich 150, der durch eine Länge von zwischen beispielsweise 2,13 und 1,37 Metern und eine breite Streuung von Hyperbelechos gekennzeichnet ist, wird einem quer zur Fahrtrichtung abgestellten Fahrzeug 50 zugeordnet, entsprechend der zweiten Objektklasse "quer parkendes Fahrzeug". Der Bereich 160, der durch eine Länge von beispielsweise weniger als 1,37 Metern und eine geringe Anzahl von Hyperbelechos gekennzeichnet ist, wird einem kurzen Objekt 60, 65 zugeordnet, entsprechend der dritten Objektklasse "Kurzes Objekt".

Abhängig von der Klassifizierung und/oder der Kombination der Objektklassen der parklückenbegrenzenden Objekte wird erfindungsgemäß der Parklücke eine bestimmte Parklückenqualität zugeordnet. Bei der Parklückenqualität handelt es sich um ein Qualitätsmaß, das beschreibt wie gut die Parklücke für das Fahrzeug geeignet ist, ausgedrückt beispielsweise durch eine Zahl zwischen 0 und 1. Als Erfindungsgemäß wird eine durch die parklückenbegrenzenden Objekte festgelegte Parklücke dann als eine mögliche Parklücke für das Fahrzeug erkannt, wenn die Parklückenqualität einem vorgegebenen Grenzwert entspricht oder den vorgegebenen Grenzwert überschreitet.

Über der Objektklassifizierung hinaus hängt die Qualität einer Parklücke maßgeblich von der Art der Objekte ab, die die Parklücke begrenzen. Des Weiteren ist die Bordsteininformation ein wichtiger Faktor. Eine solche Szene ist in Figur 4 beispielhaft dargestellt. In der dargestellten Situation wird eine Parklücke 200 erfasst, dies von den parklückenbegrenzenden Objekten 220, 240, 260 festgelegt wird.

Das Objekt 260 begrenzt die Parklücke lateral, beispielsweise kann es sich um einen Bordstein 80 handeln oder es kann keine laterale Begrenzung vorhanden sein 90. Aufgrund der Position eines Objekts 260 zwischen zwei potenziell die Parklücke begrenzenden Objekten 220, 240 wird angenommen, dass es sich um ein die Parklücke lateral begrenzendes Objekt handelt. Das Objekt 260 kann unter Berücksichtigung von sogenannten Zweitechos nochmals betrachtet werden. Zur Erkennung der "normalen" parklückenbegrenzenden Objekte 220, 240 verwendet man beispielsweise nur die sogenannten Erstechos (erstes von dem Objekt empfangenes Echosignal). Liegen die jeweils durch die Erst- und Zweitechos bestimmten Objektabstände sehr nahe beieinander, kann man davon ausgehen, dass es sich bei dem Objekt 260 um ein Objekt handelt, das höher als die Sensor-Einbauposition ist, z.B. eine Wand oder halbhohe Mauer, entsprechend der Objektklasse "Hohe laterale Parkplatzbegrenzung". Werden nur wenige oder keine Zweitechos in der Nähe der Erstechos gemessen, kann man davon ausgehen, dass es sich bei dem Objekt 260 um ein Objekt handelt, das niedriger als die Einbauposition des Sensors ist, z.B. ein Bordstein, entsprechend der Objektklasse "niedrige laterale Parkplatzbegrenzung". Es kann beispielsweise ein Verhältniswert der Anzahl der Erstechos zu der Anzahl an validen Zweitechos berechnet werden. Je näher der Verhältniswert an 100 % liegt, desto sicherer handelt es sich um ein hohes Objekt.

Das Gesamtqualitätsmaß der Parklücke 200 wird nun derart bestimmt, dass jeder Kombination von möglichen Objektklassen für die parklückenbegrenzenden Objekte 220, 240, 260 ein bestimmtes Qualitätsmaß vorgegeben wird. Insgesamt können so eine große Anzahl von Parkszenen unterschieden werden. Eine Szene setzt sich dabei aus drei Elementen zusammen:
- erstes parklückenbegrenzendes Objekt 220: Das erste begrenzende Objekt einer Parklücke an der das Fahrzeug 10 vorbeifährt
- zweites parklückenbegrenzendes Objekt 240: Das zweite begrenzende Objekt einer Parklücke an der das Ego-Fahrzeug vorbeifährt
- laterale Parklückenbegrenzung 260, wie z.B. ein Bordstein 80.

Dabei werden wie oben beschrieben das erste und zweite Objekt wie folgt klassifiziert:
- Parallel parkendes Fahrzeug 40
- Quer parkendes Fahrzeug 50
- Kurzes Objekt 60, 65
- Kein Objekt

Des Weiteren kann die laterale Parklückenbegrenzung 260 wie folgt klassifiziert werden:
- Keine laterale Begrenzung vorhanden
- Niedrige laterale Begrenzung
Insgesamt sind so beispielsweise 32 Kombinationen möglich.

Der folgenden Kombination kann nun z.B. die höchste Parklücken-Qualität von 1 zugeordnet werden:
Erstes Objekt: Parallel parkendes Fahrzeug
laterale Parklückenbegrenzung: Niedrige laterale Begrenzung
Zweites Objekt: Parallel parkendes Fahrzeug

Der folgenden Kombination kann z.B. die niedrigste Parklücken-Qualität von 0 zugeordnet werden:
Erstes Objekt: Kurzes Objekt
laterale Parklückenbegrenzung: Keine laterale Begrenzung vorhanden
Zweites Objekt: Kein Objekt

Zwischen diesen beiden Extremfällen kann es diverse Abstufungen der Parklücken-Qualität in Abhängigkeit der jeweiligen Kombination der Klassifizierungen geben, die durch Zahlen zwischen 0 und 1 repräsentiert werden. Die Zuordnung der Kombination der Klassifizierungen zu einer bestimmten Parklückenqualität kann beispielsweise in Form einer Tabelle oder eines Kennfelds im Speicher eines Steuergeräts des Fahrzeugs abgelegt sein.

Das so erreichte mehrstufige Parklücken-Qualitätsmaß ermöglicht eine Einstellung der Sensitivität der Filterung über einen frei wählbaren Arbeitspunkt je nach spezifischem Anwendungsfall.

Figur 5 stellt den Ablauf eines Ausführungsbeispiels eines erfindungsgemäßen Verfahrens als Flussdiagramm dar.

Zunächst wird das Verfahren, beispielsweise durch eine Eingabe des Fahrers oder durch eine Situationserkennung aktiviert.

In Schritt 300 erfolgt ein Erfassen von Objekten in der Umgebung des Fahrzeugs mittels mindestens eines Umfeldsensors des Fahrzeugs, wobei der Umfeldsensor Signale, insbesondere Ultraschallsignale, aussendet, die Signale an Objekten in der Umgebung des Fahrzeugs reflektiert werden und die reflektierten Signale als Echosignale von dem Abstandssensor empfangen werden.

In Schritt 400 werden parklückenbegrenzenden Objekte durch Auswertung der erfassten Echosignale identifiziert.

In Schritt 500 werden die zuvor identifizierten parklückenbegrenzenden Objekte mittels charakteristischer Strukturen der erfassten Echosignale klassifiziert.

In Schritt 600 wird eine Parklückenqualität abhängig von der Klassifizierung der parklückenbegrenzenden Objekte bestimmt.

In Schritt 700 wird überprüft, ob die durch die parklückenbegrenzenden Objekte festgelegte Parklücke eine mögliche Parklücke für das Fahrzeug ist. Dazu wird die Parklückenqualität mit einem vorgegebenen Grenzwert verglichen. Entspricht die Parklückenqualität dem vorgegebenen Grenzwert oder überschreitet die Parklückenqualität den vorgegebenen Grenzwert so wird in Schritt 800 die Parklücke als mögliche Parklücke erkannt und beispielsweise dem Fahrer ausgegeben und/oder an einen Datenserver übermittelt.

Entspricht die Parklückenqualität dem vorgegebenen Grenzwert nicht, so wird in Schritt 900 die Parklücke als mögliche Parklücke verworfen.

In Figur 6 ist ein Fahrzeug 10 dargestellt, das ein Parkassistenzsystem 5 aufweist, welches ausgebildet ist ein Verfahren nach einer Ausführung der Erfindung durchzuführen. Das Parkassistenzsystem weist einen zwei als Ultraschallsensoren ausgebildete Umfeldsensoren 30, eine Auswerteeinheit 8, eine Klassifizierungseinheit 7 und eine Ausgabeeinheit 6 auf. Die Auswerteeinheit führt die Auswertung der mittels der Ultraschallsensoren 30 erfassten Echosignale vor. Auf Basis dieser Auswertung führt die Klassifizierungseinheit 7 eine Klassifizierung von parkplatzbegrenzenden Objekten und basierend auf der Klassifizierung eine Bewertung der erfassten Parklücke aus. Die Auswerteeinheit 8 und die Klassifizierungseinheit 7 können beispielsweise als separate Bauteile vorliegen oder als Softwaremodule auf einem Steuergerät realisiert sein.

Wird die Parklücke als mögliche Parklücke erkannt, wird diese Information auf der Ausgabeeinheit 6 für den Fahrer des Fahrzeugs 10 ausgegeben. Optional kann das Parkassistenzsystem 5 außerdem eine Übertragungseinheit 4 umfassen, die dazu ausgebildet ist, die Informationen über erkannte Parklückenqualitäten und/oder Objektklassifizierungen zusammen mit Orts- und Zeitinformationen z.B. über eine drahtlose Datenverbindung an einen externen Datenserver zu übermitteln und/oder Daten über Parklücken von einem externen Datenserver zu empfangen.

## Patentansprüche

1. Verfahren zur Erkennung wenigstens einer Parklücke (200) für ein Fahrzeug (10), umfassend die Schritte:
a. Erfassen von Objekten (40, 50, 60, 65, 80) in der Umgebung des Fahrzeugs mittels mindestens eines als Abstandssensor ausgeführten Umfeldsensors (30) des Fahrzeugs, wobei der Umfeldsensor (30) Signale, insbesondere Ultraschallsignale, aussendet, die Signale an Objekten (40, 50, 60, 65, 80) in der Umgebung des Fahrzeugs (10) reflektiert werden und die reflektierten Signale als Echosignale von dem Abstandssensor empfangen werden,
b. Identifizieren von parklückenbegrenzenden Objekten (220, 240, 260) durch Auswertung der erfassten Echosignale,
c. Klassifizieren der parklückenbegrenzenden Objekte (220, 240, 260) mittels charakteristischer Strukturen der Echosignale, wobei die charakteristischen Strukturen der Echosignale Hyperbelstrukturen (20) umfassen, die sich durch Auftragen der Sensorposition (30') zum Messzeitpunkt gegenüber einem aus der Laufzeit des Echosignals bestimmten Objektabstand (35) ergeben, **gekennzeichnet durch** den Schritt
d. Bestimmen einer Parklückenqualität abhängig von der Klassifizierung der parklückenbegrenzenden Objekte (220, 240, 260), wobei eine durch die parklückenbegrenzenden Objekte (220, 240, 260) festgelegte Parklücke (200) dann als eine mögliche Parklücke für das Fahrzeug (10) erkannt wird, wenn die Parklückenqualität einem vorgegebenen Grenzwert entspricht oder den vorgegebenen Grenzwert überschreitet, wobei eine Parklücke (200) durch ein erstes parklückenbegrenzendes Objekt (220), ein zweites parklückenbegrenzendes Objekt (240) und eine laterale Parklückenbegrenzung (260) festgelegt wird und die Parklückenqualität der Parklücke (200) derart bestimmt wird, dass für eine bestimmte Kombination von möglichen Objektklassen für die parklückenbegrenzenden Objekte (220, 240, 260) ein bestimmtes, die Parklückenqualität repräsentierendes Qualitätsmaß vorgeben ist, wobei das erste und das zweite parklückenbegrenzende Objekt jeweils in eine der folgenden Objektklassen klassifiziert werden:
- Parallel zur Fahrtrichtung parkendes Fahrzeug (40)
- Quer zur Fahrtrichtung parkendes Fahrzeug (50)
- Kurzes Objekt (60, 65)
- Kein Objekt
und die laterale Parklückenbegrenzung (260) in eine der folgenden Objektklassen klassifiziert wird:
- Niedrige laterale Parkplatzbegrenzung (80)
- Hohe laterale Parkplatzbegrenzung
- Keine laterale Parkplatzbegrenzung vorhanden (90).

2. Verfahren nach Anspruch 1 **dadurch gekennzeichnet, dass** der Fahrer des Fahrzeugs (10) den Grenzwert für die Parklückenqualität vorgibt.

3. Verfahren nach einem der Ansprüche 1 oder 2 **dadurch gekennzeichnet, dass** Informationen über Parklücken (200) und/oder erfasste Objekte (40, 50 60, 65, 80) und zugeordnete Objektklassen und/oder eine zugeordnete Parklückenqualität an einen zentralen Datenspeicher übermittelt werden und dort abrufbar für andere Verkehrsteilnehmer gespeichert werden.

4. Parkassistenzsystem (5) für ein Fahrzeug (10), ausgebildet zum Durchführen des Verfahrens nach einem der Ansprüche 1 bis 3, umfassend mindestens einen Umfeldsensor (30), eine Auswerteeinheit (8), eine Klassifizierungseinheit (7) und eine Ausgabeeinheit (6).

## Claims

1. Method for detecting at least one parking space (200) for a vehicle (10), comprising the steps of:
a. capturing objects (40, 50, 60, 65, 80) in the area surrounding the vehicle using at least one environmental sensor (30) of the vehicle that is in the form of a distance sensor, wherein the environmental sensor (30) emits signals, in particular ultrasonic signals, the signals are reflected at objects (40, 50, 60, 65, 80) in the area surrounding the vehicle (10) and the reflected signals are received by the distance sensor as echo signals,
b. identifying objects (220, 240, 260) that bound the parking space by evaluating the captured echo signals,
c. classifying the objects (220, 240, 260) that bound the parking space by means of characteristic structures of the echo signals, wherein the characteristic structures of the echo signals comprise hyperbolic structures (20) which result from plotting the sensor position (30') at the measurement time against an object distance (35) determined from the propagation time of the echo signal,
**characterized by** the step of
d. determining a parking space quality on the basis of the classification of the objects (220, 240, 260) that bound the parking space, wherein a parking space (200) defined by the objects (220, 240, 260) that bound the parking space is detected as a possible parking space for the vehicle (10) when the parking space quality corresponds to a specified limit value or exceeds the specified limit value, wherein a parking space (200) is defined by a first object (220) that bounds the parking space, a second object (240) the bounds the parking space and a lateral parking space boundary (260), and the parking space quality of the parking space (200) is determined in such a manner that, for a particular combination of possible object classes for the objects (220, 240, 260) that bound the parking space, a particular quality measure representing the parking space quality is specified, wherein the first and second objects that bound the parking space are each classified in one of the following object classes:
- vehicle (40) parked parallel to the direction of travel
- vehicle (50) parked transversely with respect to the direction of travel
- short object (60, 65)
- no object
and the lateral parking space boundary (260) is classified in one of the following object classes:
- low lateral parking space boundary (80)
- high lateral parking space boundary
- no lateral parking space boundary present (90) .

2. Method according to Claim 1, **characterized in that** the driver of the vehicle (10) specifies the limit value for the parking space quality.

3. Method according to either of Claims 1 and 2, **characterized in that** information relating to parking spaces (200) and/or captured objects (40, 50, 60, 65, 80) and associated object classes and/or an associated parking space quality is transmitted to a central data memory and is stored there such that it can be retrieved by other road users.

4. Parking assistance system (5) for a vehicle (10), designed to carry out the method according to one of Claims 1 to 3, comprising at least one environmental sensor (30), an evaluation unit (8), a classification unit (7) and an output unit (6).

## Revendications

1. Procédé de reconnaissance d'au moins un emplacement de stationnement (200) pour un véhicule (10), comprenant les étapes suivantes :
a. détection d'objets (40, 50, 60, 65, 80) dans l'environnement du véhicule au moyen d'au moins capteur d'environnement (30) du véhicule réalisé sous la forme d'un capteur d'écart, le capteur d'environnement (30) émettant des signaux, notamment des signaux ultrasonores, les signaux étant réfléchis sur des objets (40, 50, 60, 65, 80) dans l'environnement du véhicule (10) et les signaux réfléchis étant reçus par le capteur d'écart sous la forme de signaux d'écho,
b. identification d'objets délimitant un emplacement de stationnement (220, 240, 260) par interprétation des signaux d'écho acquis,
c. classification des objets délimitant un emplacement de stationnement (220, 240, 260) au moyen des structures caractéristiques des signaux d'écho, les structures caractéristiques des signaux d'écho comprenant des structures hyperboliques (20) qui sont obtenues en traçant la position de capteur (30') au moment de la mesure en fonction d'un écart d'objet (35) déterminé à partir du temps de propagation du signal d'écho, **caractérisé par** l'étape
d. détermination d'une qualité d'emplacement de stationnement en fonction de la classification des objets délimitant un emplacement de stationnement (220, 240, 260), un emplacement de stationnement (200) spécifié par les objets délimitant un emplacement de stationnement (220, 240, 260) étant alors reconnus comme un emplacement de stationnement possible pour le véhicule (10) lorsque la qualité d'emplacement de stationnement correspond à une valeur limite prédéfinie ou dépasse la valeur limite prédéfinie, un emplacement de stationnement (200) étant spécifié par un premier objet délimitant un emplacement de stationnement (220), un deuxième objet délimitant un emplacement de stationnement (240) et une délimitation latérale d'emplacement de stationnement (260) et la qualité d'emplacement de stationnement de l'emplacement de stationnement (200) étant déterminée de telle sorte que pour une combinaison déterminée de classes d'objets possibles pour les objets délimitant un emplacement de stationnement (220, 240, 260), un indice de qualité représentant la qualité d'emplacement de stationnement est prédéfini, le premier et le deuxième objet délimitant un emplacement de stationnement étant respectivement classifiés dans l'une des classes d'objet suivantes :
- parallèle au sens de déplacement du véhicule (40) en stationnement
- transversal au sens de déplacement du véhicule (50) en stationnement
- objets courts (60, 65)
- aucun objet
et la délimitation latérale d'emplacement de stationnement (260) étant classifiée dans l'une des classes d'objet suivantes :
- délimitation latérale basse de l'emplacement de stationnement (80)
- délimitation latérale haute de l'emplacement de stationnement
- aucune délimitation latérale de l'emplacement de stationnement n'est présente (90).

2. Procédé selon la revendication 1, **caractérisé en ce que** le conducteur du véhicule (10) prédéfinit la valeur limite pour la qualité d'emplacement de stationnement.

3. Procédé selon l'une des revendications 1 ou 2, **caractérisé en ce que** les informations à propos des emplacements de stationnement (200) et/ou les objets (40, 50, 60, 65, 80) détectés et les classes d'objet associées et/ou une qualité d'emplacement de stationnement associée sont communiquées à une mémoire de données centrale et y sont mémorisées de manière à pouvoir être consultées par d'autres acteurs du trafic.

4. Système d'assistance au stationnement (5) pour un véhicule (10), configuré pour mettre en œuvre le procédé selon l'une des revendications 1 à 3, comprenant au moins un capteur d'environnement (30), une unité d'interprétation (8), une unité de classification (7) et une unité de sortie (6).
